# EUROPEAN PATENT APPLICATION

(11) **EP 4 116 597 A1**
(43) Date of publication of application: **11.01.2023**
(21) Application number: 22183699.2
(22) Date of filing: 07.07.2022
(51) Int. Cl.: F16D 13/75

(54) **A COVER ASSEMBLY OR FLYWHEEL ASSEMBLY FOR FRICTION CLUTCHES**

(30) Priority: 09.07.2021 TR 202111247; 09.07.2021 FR 2107509
(71) Applicant: Valeo Otomotiv Sanayi ve Ticaret A.S., 34854 Istanbul (TR)
(72) Inventor: VENKATESAN, Gnanasivam, 600130 CHENNAI (IN); SUNDARAN, Nisanth Kollante, 600130 CHENNAI (IN); KAMALAKANNAN, Manikandan, 600130 CHENNAI (IN); SAPAN, Derya, 16245 BURSA (TR); MER, Ça lar, 16245 BURSA (TR); MARIA SOOSAI, Bright Anto, 600130 CHENNAI (IN); USLU, Nihat, 16245 BURSA (TR); BILGIN, Eda Tansu, 16245 BURSA (TR); PEHLIVAN, Ahmet Koray, 16245 BURSA (TR); DÜNDAR, Ahmet, 16245 BURSA (TR); ERDOGAN, Ozgur, 16245 BURSA (TR)
(74) Representative: Valeo Powertrain Systems

(57) **Abstract**

A cover or flywheel assembly (1, 1') for friction clutch, comprising respectively
an circumference section (13, 13') on a cover (10) or
an circumference section (13') on the flywheel (F'), and
at least two fixing and/or centering holes (14, 15) provided on the circumference section (13, 13') which enables a connection by riveting or screwing for transferring a torque, and at least one axially extended adjuster (20) fixedly welded or glued to the bottom part of the circumference section (13, 13') for adjusting an axial distance between the flywheel (F, F') and the cover (10, 10'), and a body (21) and an axially extended hole (22) provided on the body (21) wherein the hole (22) is positioned respectively : under to the fixing or the centering hole or
over the fixing or the centering hole.

## Description

### TEHCNICAL FIELD

The present invention is related to a cover assembly for friction clutch comprising, a cover for at least partially covering the friction clutch, an circumference section on the cover and a fixing and/or a centering hole provided on the circumference section which enables a connection between the cover and a flywheel by riveting or screwing for transferring a torque between the flywheel and the friction clutch.

### PRIOR ART

Clutch mechanisms mainly provide gear shift in motor vehicles. In order to enable gear shifting, the connection between the gearbox and the engine which is provided by the contact of the flywheel, clutch disc and pressure plate must be disconnected. In known clutch mechanisms, the force applied by the driver to the clutch pedal is transmitted to the diaphragm spring by various transmission elements. The diaphragm spring comprises conical plate and fingers extending towards the center of the plate at the inner diameter of said plate and it is fixed in the clutch cover. The diaphragm spring is connected to the pressure plate and the pressure plate to the flywheel through the clutch disc. The force transferred to the fingers of the diaphragm, usually by a release bearing, allows the diaphragm spring to move in the opposite direction thanks to the support at the support points. As a result of this movement, the pressure plate connected with the belleville spring retracts, causing the clutch disc to retract and the contact between the clutch disc and flywheel is removed.

In such an arrangement the clutch cover and the flywheel are fixedly connected to each other and all the other parts are positioned between said the clutch cover and the flywheel. The clutch cover and the flywheel are connected by connection means which are positioned onto the fixing or the centering hole provided on the outer the circumference section of the cover and both circumference section of the clutch cover and the flywheel contacts each other.

To manufacture the clutch assembly, a sizing and forming of the clutch cover is very important design decision. The manufacturers has different needs for the clutch assembly so they use different type or sized clutch part. For example, conical height of the diaphragm spring is very variable for most of the manufacturers and it is completely change requirement of the height between the cover and the flywheel. To meet said requirements, the clutch manufacturers design so many different clutch covers and/or flywheel, with high costs, and that is obstacle for standardization for the manufacture process. Common fully casted flywheels can be replaced by both machined and casted flywheels, but each has a different shape which requires so many different news tools.

To solve such a problem, a cover assembly for a friction clutch is disclosed in DE202014008004U1. This cover assembly includes a ring which is positioned between circumference section of the clutch cover and the flywheel and provide axial length compensation between them. The ring has "U" shaped section for enabling passage for connection means that connects the clutch cover and the flywheel and made of metal strip by bending or metal sheet by punching. But its geometry is complex to manufacture and to assemble, with an expensive material. The ring and the cover is not directly connected, but connected each other by said connection means during full clutch assembly. Therefore, manufacturing process of full clutch assembly relatively slow. Besides that, the "U" shaped sections provide a little flat contact surface between the ring and the clutch cover. Geometrical defects of manufacturing, bending, flatness or positioning, are also possible.

As a result all of the problems mentioned above, have made it necessary to provide an improvements in the related field.

### OBJECTION OF THE INVENTION

The present invention, aims to eliminate the problems mentioned above and to provide a technical improvements to the related field.

The main aim of the invention is to provide a cover assembly is integrated with an adjuster which enabling axial adjustment between the cover and the flywheel and also provide easier montage to clutch assembly and more contact area.

Another aim of invention is to provide an adjuster is easily producible.

### BRIEF DESCRIPTION OF THE INVENTION

The present invention above and which can be construed from the detailed description below is, a cover or flywheel assembly for friction clutch, comprising :
- a cover for at least partially covering the friction clutch, or
- a flywheel for at least partially supporting the friction clutch,
- an circumference section on the said cover or the said flywheel,

and at least two fixing and/or centering holes (provided on the circumference section which enable a connection respectively
   between the said cover and a flywheel or
   between the said flywheel and a cover,
by riveting or screwing for transferring a torque between the flywheel and the friction clutch, wherein at least one adjuster axially extended and fixedly welded or glued to the bottom part of the circumference section for adjusting an axial distance respectively
   between the circumference section of the cover and the flywheel or
   between the circumference section of flywheel and the cover,
the at least one adjuster having at least one body and an axially extended hole provided on the body wherein the hole is positioned respectively
   under to one of the fixing and/or centering holes, or
   over to one of the fixing and/or centering holes.

Thus, the adjuster integrated to the cover or the flywheel provides standardization of the covers or the flywheels, by enabling compensate of axial distance between the cover and flywheel, without changing design of the cover (first aspect) or the flywheel (second aspect). Besides, a same range of tools is used for all friction clutch designs. And this preassembled cover assembly (first aspect) or this preassembled flywheel (second aspect) provides very fast and easy production process for the clutch mechanism.

The first aspect of the present invention above and which can be construed from the detailed description below is, a cover assembly for friction clutch comprising, a cover for at least partially covering the friction clutch, an circumference section on the cover and at least two fixing and/or centering holes provided on the circumference section which enable a connection between the cover and a flywheel by riveting or screwing for transferring a torque between the flywheel and the friction clutch. Accordingly, this first aspect comprising, at least one adjuster axially extended and fixedly welded or glued to the bottom part of the circumference section for adjusting an axial distance between the circumference section and the flywheel, the at least one adjuster having at least one body and an axially extended hole provided on the body wherein the hole is positioned under to one of the fixing and/or centering holes.

Thus, the adjuster integrated to the cover provides standardization of the covers by enabling compensate of axial distance between the cover and flywheel, without changing design of the cover. Besides, a same range of tools is used for all friction clutch designs. And this preassembled cover assembly provides very fast and easy production process for the clutch mechanism.

The second aspect of the invention above and which can be construed from the detailed description below is, a flywheel assembly for friction clutch, comprising :
- a flywheel for at least partially supporting the friction clutch, and
- an circumference section on the flywheel, and at least two fixing and/or centering holes provided on the circumference section which enable a connection between the said flywheel and a cover, by riveting or screwing for transferring a torque between the flywheel and the friction clutch.

Accordingly, this second aspect comprising, at least one adjuster axially extended and fixedly welded or glued to the bottom part of the circumference section for adjusting an axial distance between the circumference section of the cover and the flywheel, the at least one adjuster having at least one body and an axially extended hole provided on the body wherein the hole is positioned over to one of the fixing and/or centering holes.

Thus, the adjuster integrated to the flywheel provides standardization of the flywheels by enabling compensate of axial distance between the cover and flywheel, without changing design of the flywheel. Besides, a same range of tools is used for all friction clutch designs. And this preassembled flywheel provides very fast and easy production process for the clutch mechanism.

Each of these aspects of the invention may have any of the features described below in combination or taken independently:

In a preferred embodiment of the invention, the adjuster body is form of complementary shape for the circumference section (of the cover or flywheel).

In a preferred embodiment of the invention, the adjuster body is in shape of prism or cylinder, or oblong. The body of the same adjusters is based on the cutting of a single rod according to their required size. For example, the adjuster body has a radially inward pointing nose for radial contact with the cover or with the flywheel.

In a preferred embodiment of the invention, the at least one body is connected fixedly welded or glued to the bottom part of the circumference section.

A preferred embodiment of the invention comprises at least one axially extend welding projection formed on the body surface which contacts the circumference section of the cover or flywheel.

In a preferred embodiment of the invention, the hole is form of complementary shape for the fixing or the centering hole.

A preferred embodiment of the invention comprising at least two adjusters which one of them is positioned under the fixing hole and other on is positioned under the fixing or the centering hole. All adjusters are simple and inexpensive to manufacture and is stable and non-deformable even under the influence of centrifugal force. Besides, it is possible to build the clutch cover from smaller and cheaper components so that a friction clutch with such a clutch cover can be produced at lower cost.

A preferred embodiment of the invention comprising a single adjuster is positioned in all fixing and/or centering holes.

A preferred embodiment of the invention comprising at least two adjusters angularly distributed around the axis of revolution, which one of them
is positioned under the fixing hole and other one is positioned under the fixing or the centering hole, or
is positioned over the fixing hole and other one is positioned over the fixing or the centering hole.

A preferred embodiment of the invention comprising the adjuster having at least two body which one of them
is positioned under the fixing hole and other on is positioned under the fixing or the centering hole and a connection arm for connection the bodies each other, or is positioned over the fixing hole and other on is positioned over the fixing or the centering hole and a connection arm for connection the bodies each other.

A preferred embodiment of the invention comprising a series of adjusters, preferably at least four adjusters, angularly distributed around the axis of revolution. Such series of adjusters is angularly distributed around the axis of revolution of the cover or the flywheel, preferably angularly distributed into a regular or uniform distribution, preferably angularly distributed into several groups. The adjustment by adjusters is concentrated at certain points of the cover or flywheel in order to have optimal distribution.

In a preferred embodiment of the invention, the connection arm is in form of arc.

In a preferred embodiment of the invention, the connection arm is in form of ring.

In a preferred embodiment of the invention, the connection arm is positioned for contacting circumference section..

In a preferred embodiment of the invention, the connection arm is connected to fixedly welded to the bottom part of the circumference section.

In a preferred embodiment of the invention, the connection arm is connected to fixedly glued to the bottom part of the circumference section.

A preferred embodiment of the invention comprising adjusters which are angularly offset from one another around the rotation axis. In particular, the bodies are angularly distributed around the rotation axis. As a result, the cover or the flywheel can rest against the adjuster bodies at defined points. In particular, the bodies of the adjuster(s) end on a common radius, so that the cover or the flywheel can rest against the adjuster bodies in a centered manner.

In a preferred embodiment of the invention, the adjusters of the cover or the flywheel, in particular bodies, are preferably designed in the same way, for example identical.

In a preferred embodiment of the invention, the adjusters are made in the same the material or in different materials. For example, the adjusters are preferably formed from a single metal sheet, for example from a single sheet of metal.

In a preferred embodiment of the invention, the bodies are form of complementary shapes to secure them together with the cover (first aspect) or the flywheel (second aspect) and prevent them from rotating.

In a preferred embodiment of the invention, the bodies are axially offset from one another.

In a preferred embodiment of the invention, the bodies cooperate axially on each other, for example a body of first adjuster is positioned on bottom of another body of a second adjuster in axial direction and the said adjusters are connected to each other by gluing or welding.

In a preferred embodiment of the invention, the bodies are formed in a same material and/or have a same design.

In a preferred embodiment of the invention, the adjuster having at least a planar surface provided on top of the body which extends in negative or positive radial direction and contacts under or over the circumference section.

In a preferred embodiment of the invention, the at least one adjuster comprises a ridge formed on connection arm to make level of planar surface is lower than the connection arm.

In a preferred embodiment of the invention, the ridge is formed on sections that connects the connection arm and the hole positioned under or over the centering hole.

In a preferred embodiment of the invention, the at least one adjuster comprises a facing surface which facing toward to the pressure plate, is concave curved.

In a preferred embodiment of the invention, the adjuster is made of a metal sheet or a metal strip. Alternatively the adjuster is made of metal washer.

In a preferred embodiment of the invention, another adjuster positioned on bottom of the first adjuster in axial direction and the adjusters are connected to each other by gluing or welding.

Thus, instead of manufacturing a specific dimensioned adjuster, multiple adjuster can be used to compensate axial length between the cover and the flywheel for providing a modular structure.

In a preferred embodiment of the invention, an axial dimension of the bodies are different from each other.

The present invention method above and which can be construed from the detailed description below is, friction clutch for transmitting torque between the flywheel and the vehicle transmission system. Accordingly, the present invention comprising
- a cover assembly according to all or part of the features of the first aspect and connected to a flywheel, or a flywheel assembly according to all or part of the feature of the second aspect and connected to a cover,
- a friction clutch subassembly to be positioned or stacked inside the cover, and a friction clutch subassembly to be positioned or stacked inside the cover, which comprising at least,
a pressure plate and diaphragm spring coaxially arranged between the cover and the flywheel and diaphragm spring is adapted to be in contact with the clutch cover, and a friction plate under the pressure plate adapted to be selectively contact the flywheel according to pressing movement of the pressure plate, and having a first face adapted to be in contact with the pressure plate, and a second face opposite.

In a particular embodiment, the present invention comprising a cover assembly according to all or part of the features of the first aspect, a friction clutch subassembly to be positioned or stacked inside the cover, which comprising at least,
a pressure plate and diaphragm spring coaxially arranged between the cover and the flywheel and diaphragm spring is adapted to be in contact with the clutch cover, and a friction plate under the pressure plate adapted to be selectively contact the flywheel according to pressing movement of the pressure plate, and having a first face adapted to be in contact with the pressure plate, and a second face opposite.

In another particular embodiment, the present invention comprising a flywheel assembly according to all or part of the feature, a friction clutch subassembly to be positioned or stacked inside the cover, and a friction clutch subassembly to be positioned or stacked inside a cover, which comprising at least,
a pressure plate and diaphragm spring coaxially arranged between the cover and the flywheel and diaphragm spring is adapted to be in contact with the clutch cover, and a friction plate under the pressure plate adapted to be selectively contact the flywheel according to pressing movement of the pressure plate, and having a first face adapted to be in contact with the pressure plate, and a second face opposite.

A preferred embodiment of the invention comprising a gap in radial direction is provided between the body and the pressure plate.

The present invention method above and which can be construed from the detailed description below is, a method of assembling an adjuster and a cover. Accordingly, the method comprising the following steps:
a) providing a cover having circumference sections and a fixing and/or a centering hole provided on the circumference section;
b) selecting
   - a flywheel to be connected to the cover having
      a transmission surface to be selectively contacted a friction plate and
      a connection surface which the cover and the flywheel connects each other,
   - a friction clutch subassembly to be positioned or stacked inside the cover, which comprising at least,
      a pressure plate and diaphragm spring coaxially arranged between the cover and the flywheel and diaphragm spring is adapted to be in contact with the clutch cover, and a friction plate under the pressure plate adapted to be selectively contact a transmission surface according to pressing movement of the pressure plate, and having a first face adapted to be in contact with the pressure plate , and a second face opposite;
c) measuring
   - a first dimension representative of an axial distance between the top of the clutch cover and the first face,
   - a second dimension representative of an axial distance between the top of the clutch cover and the circumference sections of the clutch cover
   - a third dimension representative of an axial distance between the transmission and connection surface of the flywheel;
d) selecting and providing at least one adjuster having a body and an axially extended hole provided on the body, said extended body is configured to be mounted on the bottom part of circumference section and
   an adjuster dimension axially between a first lateral face configured to be fixed to the clutch cover and a second lateral face configured to be fixed to connection surface (Cs) of the flywheel and
   the total value of adjuster dimensions being selected as a function of the first and second and third dimensions so as to adjust the positions of the clutch cover and the friction clutch subassembly relative to each other;
e) then positioning the first lateral face on the bottom part of circumference section then connecting fixedly said adjuster to the clutch cover by welding or gluing.

Thus, this method of assembling simplify the manufacturing and assembly steps of the friction clutch, especially its closing step with the cover and the adjuster(s) which are the last elements to be positioned. It is possible to reduce the check of chains of dimensions after the stacking of components. Each adjuster has a predefined dimension or thickness that can be selected according to the dimensions linked to the cover. Thus, the vacant space between the cover and the flywheel is artificially readjusted by using one or more predefined adjuster(s) to be mounted in this vacant space.

The present invention method above and which can be construed from the detailed description below is, a method of assembling an adjuster and a flywheel. Accordingly, the method comprising the following steps:
a') providing a flywheel having circumference sections and at least two fixing and/or centering holes provided on the circumference section;
b') selecting
   - a cover to be connected to the flywheel,
      a transmission surface to be selectively contacted a friction plate and
      a connection surface which the flywheel and the cover connects each other,
   - a friction clutch subassembly to be positioned or stacked inside the cover, which comprising at least,
      a pressure plate and diaphragm spring coaxially arranged between the cover and the flywheel and diaphragm spring is adapted to be in contact with the clutch cover, and a friction plate under the pressure plate adapted to be selectively contact a transmission surface according to pressing movement of the pressure plate, and having a first face adapted to be in contact with the pressure plate, and a second face opposite;
c') measuring
   - a first dimension representative of an axial distance between the top of the clutch cover and the first face,
   - a second dimension representative of an axial distance between the top of the clutch cover and the circumference sections of the flywheel,
   - a third dimension representative of an axial distance between the transmission and connection surface of the flywheel;
d') selecting and providing at least one adjuster having at least a body and an axially extended hole provided on the body, said extended body is configured to be mounted on the bottom part of circumference section and
   an adjuster dimension axially between a first lateral face configured to be fixed to the clutch cover and a second lateral face configured to be fixed to connection surface of the flywheel and
   the total value of adjuster dimensions being selected as a function of the first and second and third dimensions so as to adjust the positions of the clutch cover and the friction clutch subassembly relative to each other;
e') then positioning the second lateral face on the bottom part of circumference section, then connecting fixedly said adjuster to the clutch cover by welding or gluing.

Thus, this method of assembling simplify the manufacturing and assembly steps of the friction clutch, especially its closing step with the cover and the adjuster(s) which are the last elements to be positioned. It is possible to reduce the check of chains of dimensions after the stacking of components. Each adjuster has a predefined dimension or thickness that can be selected according to the dimensions linked to the flywheel. Thus, the vacant space between the cover and the flywheel is artificially readjusted by using one or more predefined adjuster(s) to be mounted in this vacant space.

### BRIEF DESCRIPTION OF THE FIGURES

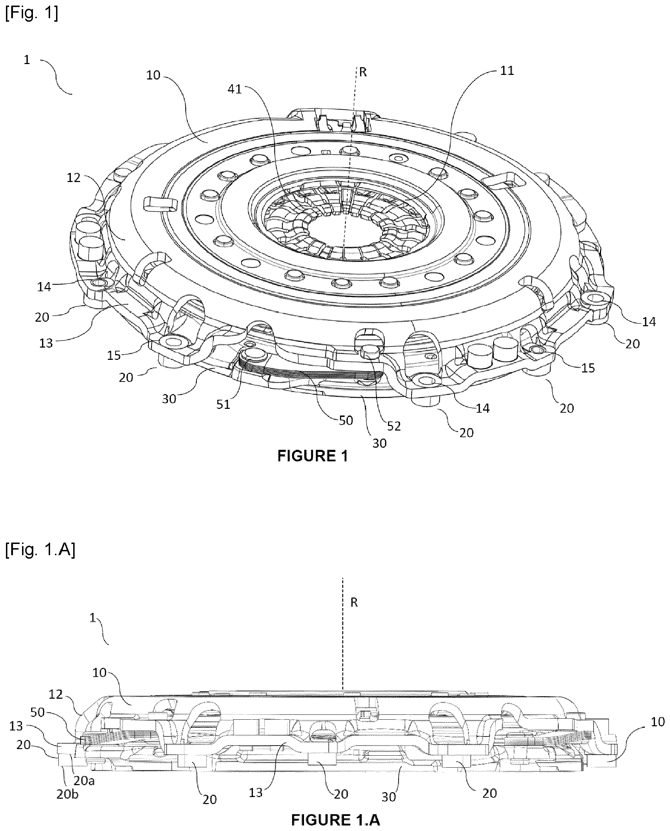

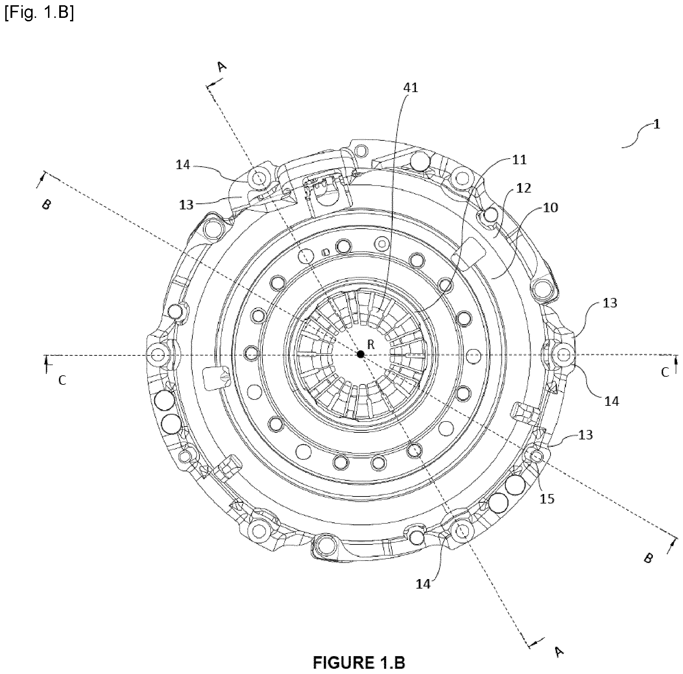

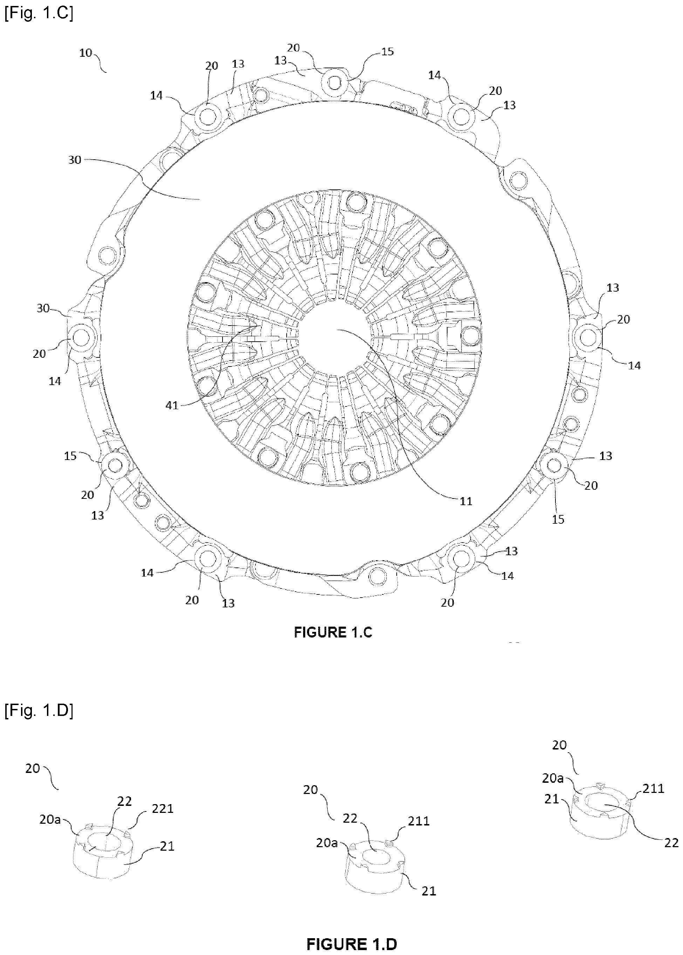

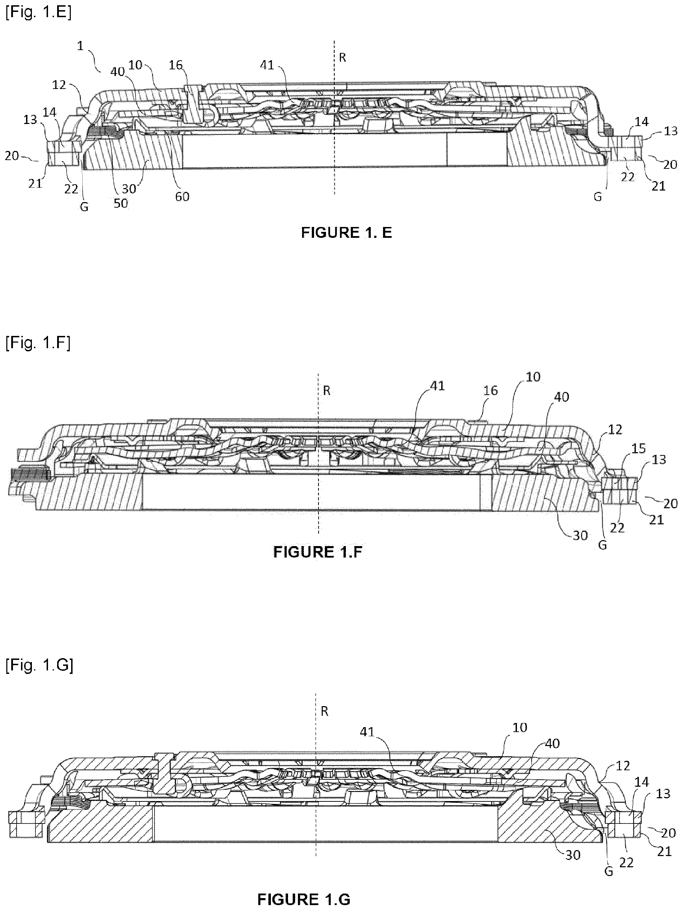

- [Fig. 1] illustrates an isometric view of the cover assembly of a first embodiment.
- [Fig. 1.A] illustrates a front view of the Fig. 1.
- [Fig. 1.B] illustrates a top view of the Fig. 1.
- [Fig. 1.C] illustrates a top view of the Fig. 1.
- [Fig. 1.D] illustrates an isometric view of adjusters of the Fig. 1.
- [Fig. 1.E] illustrates a cross section view of Fig. 1.B along A-A line.
- [Fig. 1.F] illustrates a cross section view of Fig. 1.B along B-B line.
- [Fig. 1.G] illustrates a cross section view of Fig. 1.B along C-C line.
- [Fig. 2] illustrates an isometric view of the cover assembly of a second embodiment.

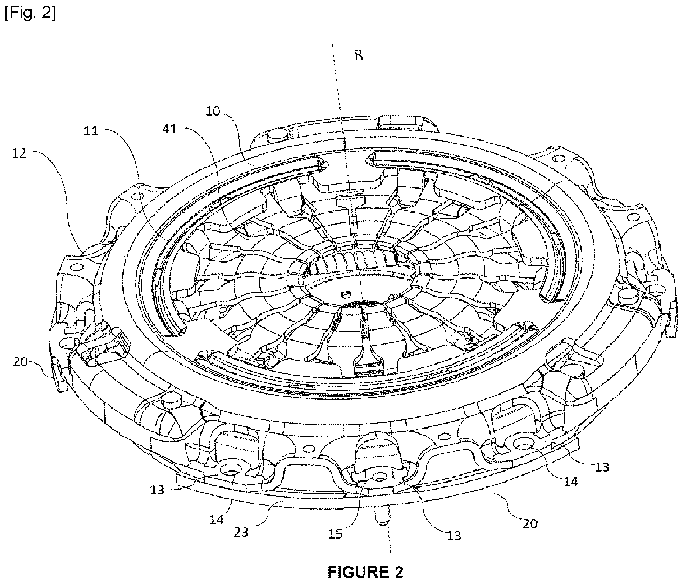

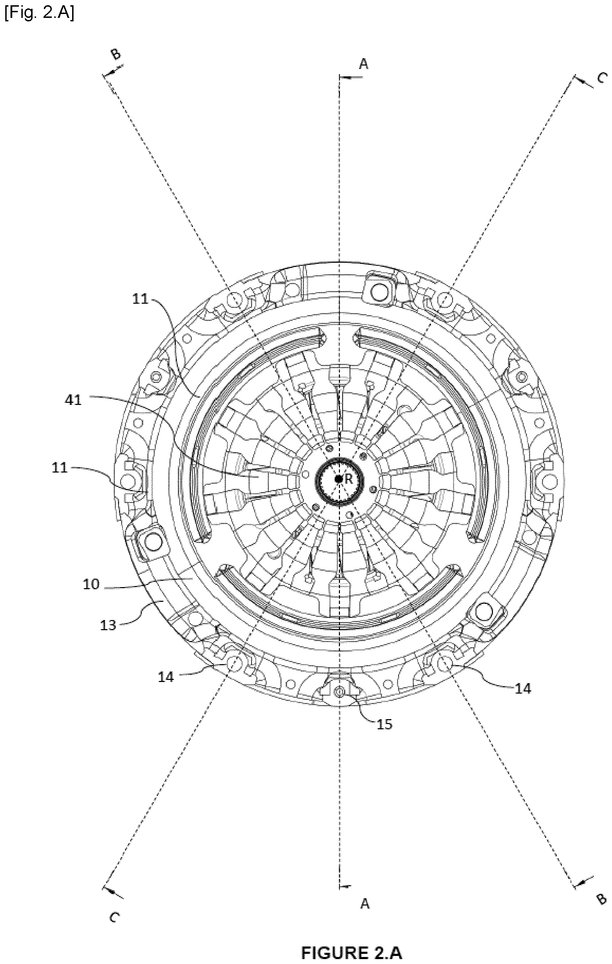

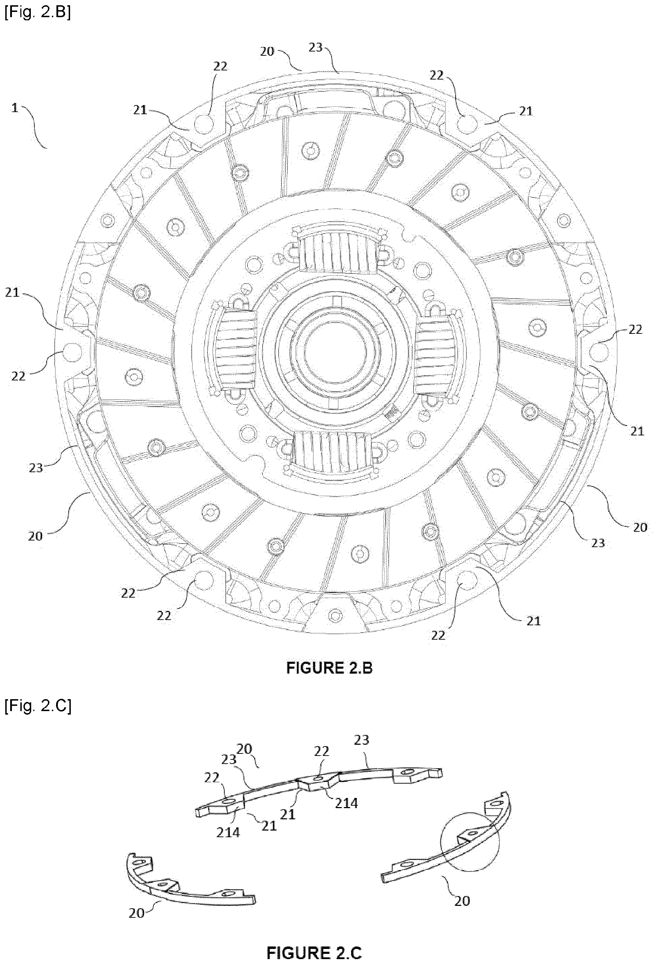

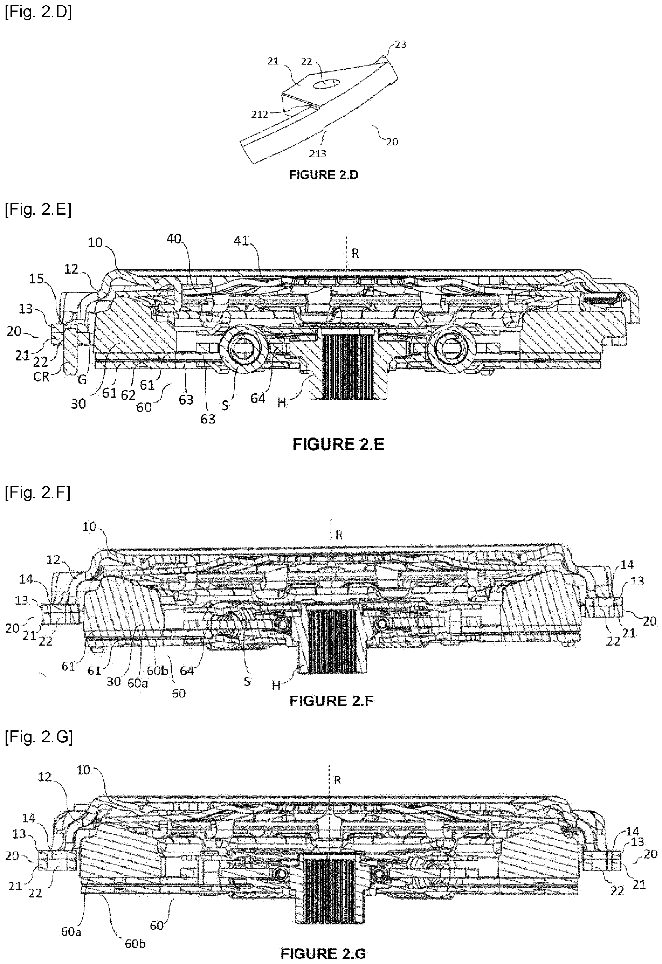

- [Fig. 2.A] illustrates a top view of the Fig. 2.
- [Fig. 2.B] illustrates a bottom view of the Fig. 2.
- [Fig. 2.C] illustrates an isometric view of the adjusters of the Fig. 2.
- [Fig. 2.D] illustrates a detailed view of body part of Fig 2.C.
- [Fig. 2.E] illustrates a cross section view of Fig. 2.A along A-A line.
- [Fig. 2.F] illustrates a cross section view of Fig. 2.A along B-B line
- [Fig. 2.G] illustrates a cross section view of Fig. 2.A along C-C line.

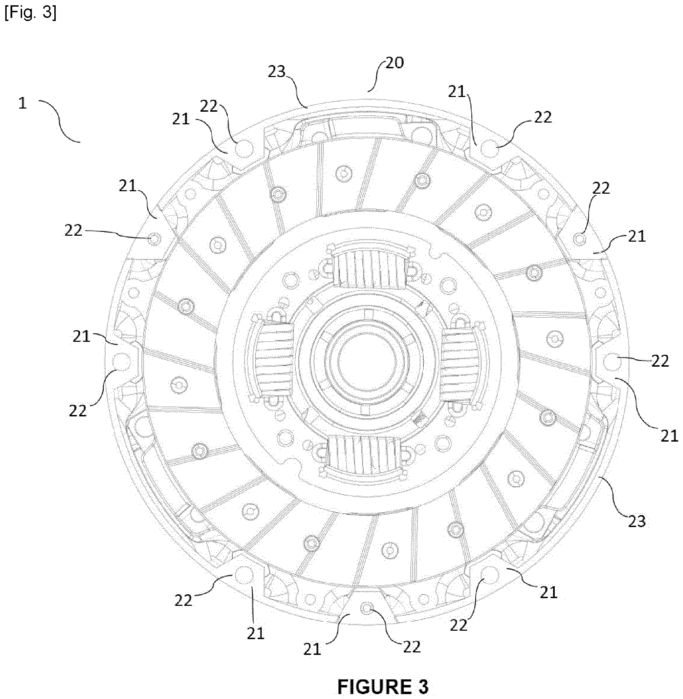

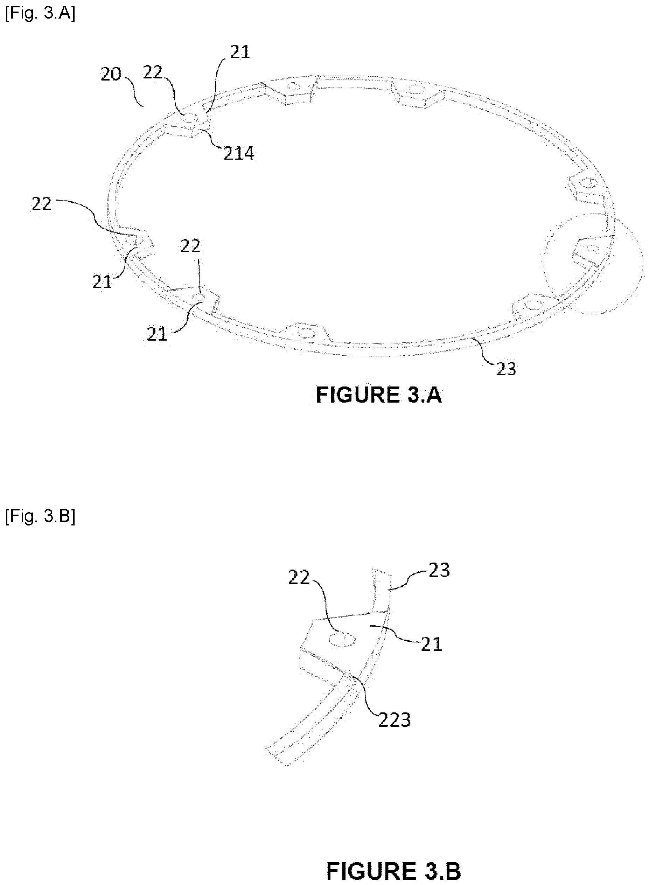

- [Fig. 3] illustrates a bottom view of the cover assembly of a third embodiment.
- [Fig. 3.A] illustrates an isometric view of the adjusters of the Fig. 3.
- [Fig. 3.B] illustrates a detailed view of body part of Fig 3.A.

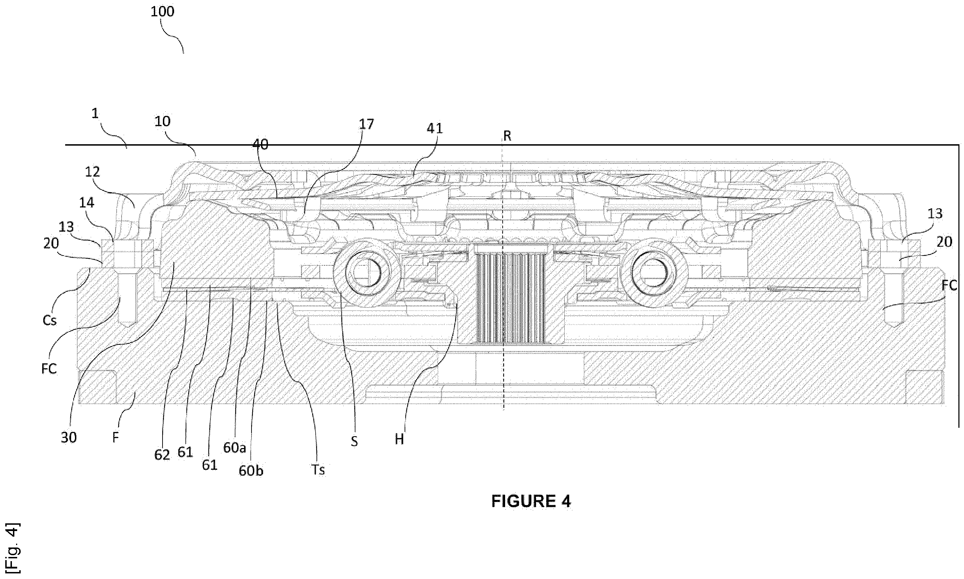

- [Fig. 4] illustrates a cross section view of clutch of Fig 3.A.

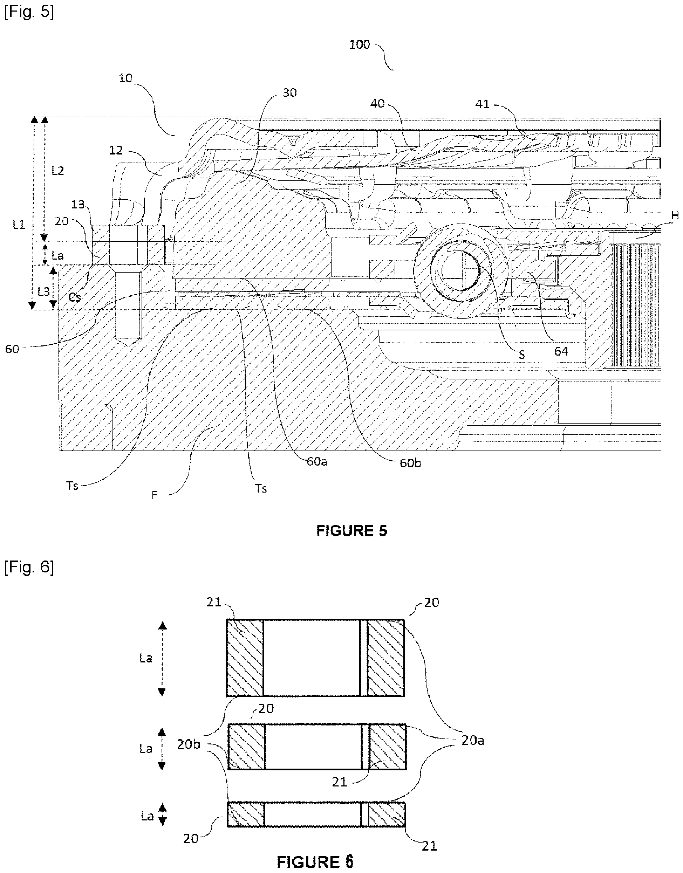

- [Fig. 5] illustrates a partial cross section view of clutch.
- [Fig. 6] illustrates a cross section view of the multiple adjusters.

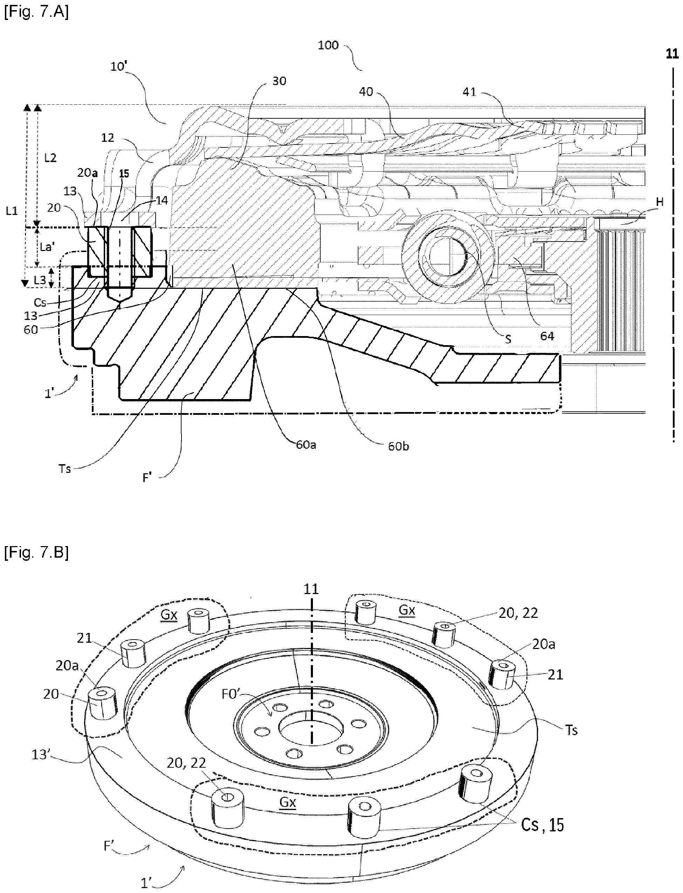

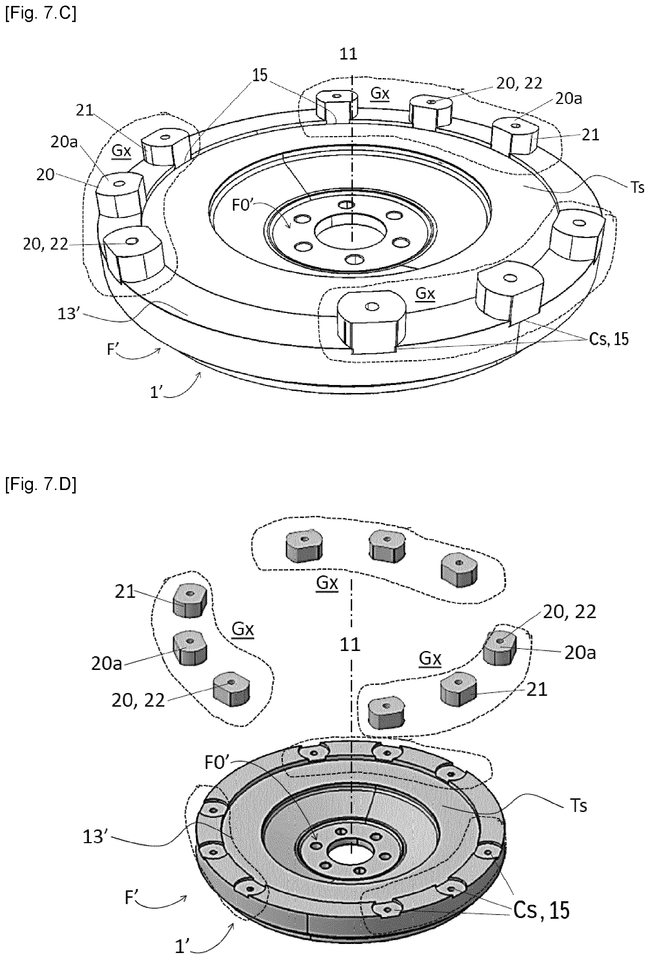

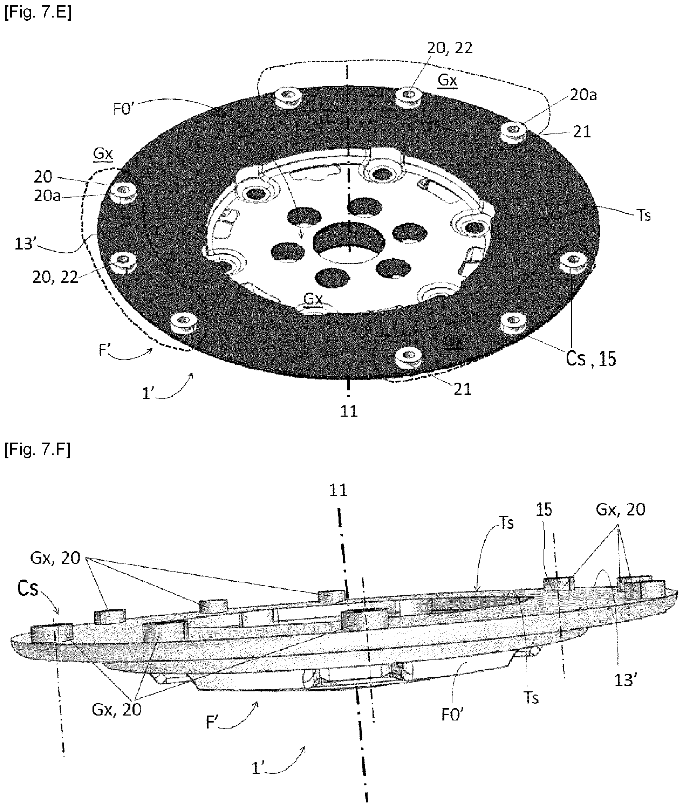

- [Fig. 7.A] illustrates a partial cross section view of clutch.
- [Fig. 7.B] illustrates an isometric view of the flywheel assembly of the Fig. 7.A.
- [Fig. 7.C] illustrates an isometric view of another example of flywheel assembly.
- [Fig. 7.D] illustrates an exploded view of the flywheel assembly of the Fig. 7.C.
- [Fig. 7.E] illustrates an isometric view of another example of flywheel assembly.
- [Fig. 7.F] illustrates a detailed view of another example of flywheel assembly.

Accompanying drawings are given solely for the purpose of exemplifying a flywheel and a related production method whose advantages over prior art were outlined above and will be explained in brief hereinafter. The drawings are not meant to delimit the scope of protection as identified in the claims nor should they be referred to alone in an effort to interpret the scope identified in said claims without recourse to the technical disclosure in the description of the present invention.

### REFERENCE NUMBERS OF THE FIGURES

**1.** Cover assembly
**1'.** Flywheel assembly
**10, 10'.** Cover
**11.** Centre aperture
**12.** Curved section
**13, 13'.** Circumference section
**14.** Fitting hole
**15.** Centering hole
**16.** Connection rivet
**17.** Spring retainer
**20.** Adjuster
**20a.** First lateral surface
**20b.** Second lateral surface
**21.** Body
**211.** Welding projection
**212.** Ridge
**213.** Lower ridge
**214.** Facing surface
**22.** Adjuster hole
**23.** Connection arm
**30.** Pressure plate
**40.** Diaphragm spring
**41.** Finger
**50.** Leaf spring
**51.** Pressure Plate Rivet
**52.** Cover Rivet
**60.** Friction plate
**60a.** First face
**60b.** Second face
**61.** Friction lining
**62.** Friction disc
**100.** Clutch mechanism
**R.** Rotation axis
**F, F'.** Flywheel
**Ts.** Transmission surface
**Cs.** Connection surface
**G. Gap**
**S.** Spring
**H.** Hub
**CP.** Centering pin
**FC.** Flywheel connection mean
**L1.** First dimension
**L2.** Second dimension
**L3.** Third dimension
**La, La'.** Adjuster dimension
**Gx.** Group of adjusters

### DETAILED DESCRIPTION OF THE INVENTION

In this detailed description a cover assembly for friction clutches that subject to the invention have been illustrated with non-limiting examples in order to further describe the subject matter of the invention.

The invention is related to a cover assembly (1) for friction clutch comprising, a cover (10) for at least partially covering the friction clutch, an circumference section (13) on the cover (10) and a fixing and/or a centering hole (14, 15) provided on the circumference section which enables a connection between the cover (10) and a flywheel (F) by riveting or screwing for transferring a torque between the flywheel (F) and the friction clutch. The flywheel (F, F') can be a engine flywheel to be connected directly to the crankshaft, or a flywheel of a double damper system, to be connected to a driving shaft or here driven shaft.

Referring to Fig 1. and 1.A; A cover assembly (1) is configured to be rotatable with a flywheel (F) in rotation axis and to be connected to the flywheel (F) to enable selectively cut off an engine torque that transfer to the transmission system of vehicles. Said connection is provided by the connection mean, i.e rivet, screw, pin or similar, that positioned on fixing and/or a centering hole (14, 15) provided on the cover (10) and corresponding holes formed on the flywheel (F). In a preferred embodiment, the cover (10) comprising both the fixing and a centering hole (14, 15), however it is possible that the cover assembly (1) comprising only one of them, preferably the fixing hole (14).

The cover (10, 10') is preferably is in circular shape and provides an inner volume which is space for part of friction clutch that will be mentioned later. In the center of the cover (10, 10'), a cover aperture (11) is formed and said cover aperture (11) is also formed as a hole.

A circumference section (13) is formed on outer diameter of the cover (10, 10'). A curved section (12) is formed between the cover aperture (11) and the circumference section (13) and said curved section (12) provides distance in axial direction between the cover aperture (11) and the circumference section (13).

Referring to Fig 1, 1.C and 1.E; a diaphragm spring (40), as belleville spring, positioned a said inner volume of the cover (10) and connected to the cover (10) .The diaphragm spring (40) has circular body and an aperture on the center of the body wherein said aperture and cover aperture (11) coaxially arranged. Fingers (41) are formed on the diaphragm spring (40) and said finger (41) of the diaphragm spring (40) is radially extend to the center of said cover aperture (11).

Under the diaphragm spring (40), a pressure plate (30) is positioned, as can be seen Fig. 1 and 1.C. The pressure plate (30) is mass that push a friction plate (60). The friction plate (60) is shown in Fig. 2.E-2.G however, the embodiment shown in Fig 1.E has also comprise the friction plate (60) even if it isn't shown. The diaphragm spring (40) is configured to enable contact between the friction plate (60) and a transmission surface (Ts) of the flywheel (F) in normal state. The clutch pedal is pressed, the separation ring (not shown in figures) pushes the fingers (10) of the diaphragm spring (40). Consequently, the diaphragm spring (40) pulls back the pressure plate (30) and friction plate (60) in axial direction to cut off the torque that transfer between vehicle engine and transmission system.

A leaf spring (50) may be provided for connecting the cover (10) and the pressure plate (30) to each other. Plurality of leaf spring (50) are provided on top of each other and one end is connected to the pressure plate (30) by a pressure plate rivet (51) and other end is connected to the cover (10) by a cover rivet (52). Said connection doesn't block axial movement of the cover (10) and pressure plate (30) respect to each other and provide damping effect.

Referring to Fig. 1 and 1.A; to provide such a functionality, the cover (10) and the flywheel (F) must be connected to each other. The connection is provided by holes formed on circumference section (13) and corresponding holes formed on the flywheel (F). The said holes are the fixing and the centering hole (14, 15).

We already disclosed that the cover (10) covered, at least partially covered, friction clutch elements, such as the diaphragm (40) and pressure plate (30), are provided inside volume provided in inner space of the cover (10). The size and geometric shape of said friction clutch elements can vary, i.e. conical height of the diaphragm spring (40), so size and shape of the cover must be adjusted accordingly. Especially height of the cover (10) must be adjusted because the circumference section (13) must be contact the flywheel (F) to provide connection between them.

In present invention, to provide contact between the circumference section (13) and the flywheel (F), a cover assembly with an adjuster (20) which comprises a body (21) positioned between the circumference section (13) and the flywheel (F) and an axially extended hole (22) provided on the body (21), instead of the redesigning the cover (10) for every specification of friction clutch elements. In this solution, only changing of the axial thickness of the adjuster (20) is enough to compensate the distance between contact between the circumference section (13) and the flywheel (F).

Referring to Fig. 1; the adjuster (20) comprising a body (21) which provide two planar surface that a first lateral surface (20a) contacts the circumference section (13) and a second lateral surface (20b) contacts the flywheel (F). The adjuster (20) is positioned under the at least one of the preferably both of the fixing and the centering hole (14, 15).

Referring to Fig. 1.B and 1.E-1.G; the adjuster (20) has an axially extended hole (22) which is positioned under the fixing and the centering hole (14, 15). Diameter of said hole (22) is big enough to let the connection means pass through to reach hole formed on the flywheel (F). Preferably said hole (22) has same diameter with fixing and the centering hole (14, 15).

The body (21) is in shape of the cylinder in Fig.1-Fig.1.G. However, the cylinder shape is not limited for the invention. The body (21) may be in in shape of the prism, for example in shape of cube or rectangular prism. The shape of the body (21) may be formed in a complementary shape for the circumference section (13) or more preferably for the fixing and/or the centering hole (14, 15) to prevent rotation of the body and securing them in the cover assembly.

The body (21) of the adjuster (20) is preassembled to the cover (10). The cover (10) and adjuster (20) delivered as one-piece to the friction clutch production process. A pre-assembling can be carried out by both gluing and welding process.

For gluing process, a metal glue, which is specialized type glue for metals, are used. A glue applied on the surface of the body (21), especially on the first lateral surface (20a), that contacts under the circumference section (13) or vice-versa.

For welding process, a welding material may be dropped on applied on the surface of the body (21), especially on the first lateral surface (20a), that contacts under the circumference section (13) or vice-versa and welding is carried out.

As can be seen in Fig 1.D, an axially extended welding projections (211) on surface of the body (21) that contacts under the circumference section (13). The welding projections (211) melts during the welding process, i.e. spot welding, and connects the cover (10) and the adjuster to each other.

The body (21) can be made of a metal sheet or a metal strip by punching or bending. The holes (22) can be produced by the drill operation on the body (21).

An embodiment shown in Fig.1-1.G, the cover assembly (1) comprises the groups includes two fixing hole (14) and one centering hole (15). In this embodiments, one adjuster (20) is provided for each fixing hole (14) and centering hole (15). It is advantageous but not necessarily limited. The adjusters (20) may be provided for only fixing holes (14).

Besides that, it is possible that an axial height of adjuster (20) are different for each other, if the distances between the flywheel (F) and the fixing hole (14) and the distances between the flywheel (F) and the centering hole (14) are vary.

Referring to Fig.2-2.B; the cover assembly (1) comprises the adjusters (20) are connected to each other by connection arm (23). The connection arm (23) is configured to place each adjuster (20) place under the fixing and the centering holes (14, 15). In Fig.2, three adjusters (20) are connected each other by connection arm (23). Here, two adjusters (20) are provided for the fixing holes (14) and other one for the centering hole (15). The number of adjusters (20) connected by connection arm (23) may vary, less or more, according to type or structure of the cover (10).

The bodies (21) and the connection arm (23) are produced as a one-piece.

The connection arm (23) may be in form of arc. Besides that the connection arm (23) may form in different shapes, i.e. line, however arc form provides most contact area between the cover (10) and the flywheel (F).

Referring to Fig. 2.A and 2.E-2.G; the adjuster (20) has an axially extended hole (22) which is positioned under the fixing and the centering hole (14, 15). Diameter of said hole (22) is big enough to let the connection means, i.e. centering pin (CP) for centering hole (15), pass through to reach hole formed on the flywheel (F). Preferably said hole (22) has same diameter with fixing and the centering hole (14, 15).

The body (21) of the adjusters (20) connected to each other by connection arm (23) is formed as a radially extended surface has the hole (22) provided on it. Each connection arm (23) create a group (Gx) of adjusters. Also, the cylindrical and prism shaped bodies (21) can be connected to each other by connection arm (23) however the radially extended surface shaped bodies (21) provides much more contact area. The bodies (21) mentioned extends from the connection arm (23) towards to center of the cover assembly (1). Said radial extension direction can be both negative and positive radial direction. In this embodiment, the body (21) can be made of a metal sheet by punching. The holes (22) can be produced by the drill operation on the body (21).

Referring to Fig.2.B; if the distances between the flywheel (F) and the fixing hole (14) and the distances between the flywheel (F) and the centering hole (14) are vary on the cover (10), the bodies (21) can be provided axially offset from one another to compensate said distance difference. To create axial offset, a ridge (212) and a lower ridge (213) are formed on the section that the connection arm (23) and the body (21) connects each other.

As can be seen in Fig.2.B, the adjuster (20) having a facing surface (214), preferably curved, which facing toward to the pressure plate (30). Said curved section make possible that extending radial length of the body (21) without touching the pressure plate (30) and provide more contact are for the body (21). A gap (G) between the adjuster (20) and the pressure plate (30) is essential for the clutch assemblies. Also, the curved section may be provided on the bodies (21) in shape of cylinder or prism.

Referring to Fig.3-3.B; the connection arm (23) which connects more than bodies (21) is already disclosed. The connection arm (23) also can be configured to connect all the bodies (20) together. To accomplish that, the connection arm (23) preferably is in a ring shape. Besides that the connection arm (23) may form in different shapes, i.e. polygon, however ring form provides most contact area between the cover (10) and the flywheel (F).

In the embodiment shown in Fig.3.A and 3.B, the bodies (21) also can be provided axially offset from one another.

In all the embodiment shown in Fig.2 and 3.B, the friction plate (60) is shown. As we mentioned before, the embodiment shown in Fig 1-1.G also comprises the friction plate (60). The cover (10) and the adjuster (20) is always preassembled in present invention.

In this assembling method, firstly, the cover (10) is provided and said cover (10) comprising at least circumference sections (13) and a fixing and/or a centering hole (14, 15) provided on the circumference section (13). After providing the cover (10), both the flywheel (F) and the friction clutch subassembly to be used for a clutch mechanism are selected.

After selection of the cover (10), flywheel (F) and the friction clutch subassembly, the adjuster (20) or adjusters (20) are fixed between flywheel (F) and the cover (10) for adjusting an axial distance between the circumference section (13) and the flywheel (F). To achieve such an adjustment, the adjuster (20) has to be having a certain adjuster dimension (La). To provide right adjuster dimension (La), one or multiple adjusters (20) which are positioned on each other in axial direction. In case that multiple adjusters (20) are used, the adjusters (20) are connected to each other by gluing or welding.

Referring to Fig. 5; the friction clutch subassembly comprises at least, a pressure plate (30) and diaphragm spring (40) coaxially arranged between the cover (10) and the flywheel and diaphragm spring (40) is adapted to be in contact with the clutch cover (10), and a friction plate (60) under the pressure plate (30) adapted to be selectively contact the flywheel (F) according to pressing movement of the pressure plate (30), and having a first face (60A) adapted to be in contact with the pressure plate (30), and a second face (60B) opposite.

The friction clutch subassembly is normally positioned or stacked inside the cover (10) and the flywheel (F) is connected to the cover (10) via circumference sections (13) however the cover (10) and adjusters (20) can be assembled without the friction clutch subassembly and the flywheel (F) in some cases. If the cover (10) and adjusters (20) are assembled without the friction clutch subassembly and the flywheel (F), it is sufficient to measure some dimensions of the friction clutch subassembly and the flywheel (F). This measurements of the dimensions are based on the flywheel (F) and cover (10) are connected each other and friction clutch subassembly positioned between them. We already mentioned that flywheel (F) and cover (10) and friction clutch subassembly may not be assembled to each other, during the assembling of the adjuster (20) and the cover (10).

To provide right adjusters (20), three measurement are needed. First of all, a first dimension (L1) is measured. The first dimension (L1) is an axial height of the cover (10). The axial height of the cover (10) is distance between the top surface of the cover (10) and the bottom surface of the circumference sections (13). The top surface of the cover (10) isn't planar in most cases, so chosen spot for measuring the first dimension (L1) must be used for other measurements, too.

After that a second dimension (L2) is measured. The second dimension (L2) is axial height of the cover (10) and friction clutch subassembly together, when the clutch mechanism fully is assembled. For the second dimension (L2), axial height between top surface of the cover (10) and second face (60b) of the friction plate (60) is measured.

The third dimension (L3) is axial height between the transmission and the connection surfaces (Ts, Cs). The transmission surface (Ts) is the surface of the flywheel (F) that the second face (60b) of the friction plate contacts selectively. The connection surface (Cs) is the surface of the flywheel (F) adapted to be connected to the circumference sections (13). In some cases, surface of the flywheel (F) is planar and the third dimension (L3) is measured as a "0".

An adjuster dimension (La, La') is axial height of the adjuster (20), more specifically the distance between the first and second lateral face (20a, 20b) and it must be chosen according to the first, the second and the third dimensions (L1, L2, L3). Briefly, the adjuster dimension (La, La') is being selected as a function of the first and second and third dimensions (L1, L2, L3).

A difference between the first dimension (L1) and total value of the second and the third dimension gives adjuster dimension (La, La') which compensate distance between the connection surface (Cs) of the flywheel (F) and circumference sections (13) of the cover (20), without manufacture tolerances.

The adjuster dimension (La, La') may be provided by one adjusters (20), but also may be provided multiple adjusters (20). For example, two adjusters having axial height of 2.5 mm can be used for compensating 5 mm distance between the connection surface (Cs) and bottom of the circumference sections (13). The adjusters (20) may have different axial heights, as can be seen Fig. 6. For example, the adjuster (20) having axial height of 1,5 mm and another adjuster (20) having axial height of 0,5 mm can be used for compensating 3 mm distance. The said adjusters (20) may be connected to each other by gluing or welding.

The adjusters (30) axial height range is between 0,5-8 mm.

After selecting the adjuster (20) or adjusters (20) having right adjuster dimension (La), the cover (10) and the adjuster (20) is placed on top of each other in a first angular position. After that, the cover (10) or the adjuster (20) are angularly moved to a second angular position so that the first lateral surface (20a) contacts the under the circumference sections (13) such that the hole (22) and fixing and/or a centering hole (14, 15) are aligned and the cover (10) and the adjuster (20) is fixed to each other in the second angular position by welding or gluing.

Term of "first angular position" defines positions of the cover (10) and the adjuster (20) respect to each other and in this positioning, hole (22) and fixing and/or a centering hole (14, 15) aren't aligned generally. Term of "second angular position" defines the position the hole (22) and fixing and/or a centering hole (14, 15) are aligned.

If the body (21) has the welding projection (211) shown in Fig 1.D, after providing the second angular position the welding operation may be directly carried out. In this process, the welding projections (211) melts during the welding process, i.e. spot welding, and connects the cover (10) and the adjuster to each other.

In another embodiment of the method, after providing the second angular position, the adjuster (20) is moved away from the cover (10) and a fixing material, such as welding or gluing, is applied, if the direct welding won't be using. The fixing material can be applied both the planar surface of the adjuster (20) and the bottom of the circumference sections (13).

The fixing material can be both of welding or gluing material. If the welding material is selected, the adjuster (20) and the cover (10) bring closer together and the welding is carried out. If the gluing material is selected, the adjuster (20) and the cover (10) contact each other and wait to gluing material is to cure.

Referring to Fig.4; a mentioned cover assembly (1) is used for a clutch mechanism (100).

The clutch mechanism (100) for selectively cut off and transfer between vehicle engine and vehicle transmission system comprising,
a cover assembly (1) having
   a cover (10) for at least partially covering a friction clutch and
   an circumference section (13) on the cover (10) and a fixing and/or a centering hole (14, 15) provided on the circumference section (13) which enables a connection between the cover (10) and a flywheel (F) by riveting or screwing for transferring a torque between the flywheel (F) and the friction clutch,
   at least one axially extended adjuster (20) fixedly welded or glued to the bottom part of the circumference section (13) for adjusting an axial distance between the circumference section (13) and the flywheel (F) and
   a body (21) and an axially extended hole (22) provided on the body (21) wherein the hole (22) is positioned under to the fixing or the centering hole (14, 15),
the friction clutch subassembly having
   a pressure plate (30) and diaphragm spring (40) coaxially arranged between the cover (10) and the flywheel and diaphragm spring (40) is adapted to be in contact with the clutch cover (10), and
   a friction plate (60) under the pressure plate (30) adapted to be selectively contact the flywheel (F) according to pressing movement of the pressure plate (30), and having a first face (60A) adapted to be in contact with the pressure plate (30), and a second face (60B) opposites flywheel (F) connected to the circumference section (13) by the flywheel connection mean (FC) which first goes thorough one of the fixing and the centering hole (14, 15) and then the hole (22) of the adjuster (20).

For this clutch mechanism (100), any of the cover assembly (1) described in claims and detailed description can be used.

The preferred embodiment of the clutch mechanism (100) is shown in Fig.4. The clutch mechanism (100) comprising the cover (10). Between the circumference section (13) and the flywheel (F), the adjusters (20) are positioned in such a way that the hole (22) of the adjuster (22) and fixing and/or centering hole (14) of the cover (10) are aligned. The flywheel connection mean (FC) is positioned on said holes to connect the cover (10) and a connection surface (Cs) of the flywheel (F) to each other.

The cover (10) defines inner volume as disclosed previously in this detailed description section. In the inner volume of the cover (10), a diaphragm spring (40) is positioned and the fingers (41) of the diaphragm (40) radially extend to center aperture (11) formed on the center of the cover (10). A spring retainer (17), which is integrated to the cover (10), formed on the edge of the center aperture (11) and extends between the fingers (10) to retain the diaphragm spring (40). Preferably, the spring retainer (17) is "L" shape. Under the diaphragm spring (40), a pressure plate (30) is placed such that the diaphragm spring (40) is configured to enable contact between the friction plate (60) and the flywheel (F) in normal state. The pressure plate (30) has an aperture on the center and a vibration damper having springs (S) to damp vibration and the hub (H) configured to be connected to shaft of vehicle engine is placed on said aperture. The vibration damper is connected to a friction disc (62) of the friction plate (60). The friction plate (60) comprising two friction linings (61) and one of them is positioned upper surface of the friction disc (62) and the other one is positioned at bottom surface of the friction disc (62). Upper friction lining (61) is configured to be contacted to the pressure plate (30) and bottom friction lining (61) is configured to be contacted to the flywheel (F).

Rather than being assembled on the cover, the adjuster(s) (20) can be assembled on a circumference section (13') of the flywheel (F').

Referring to Figures 7A, 7B, 7C, 7D, 7E, 7F another embodiment of the invention is illustrated, substantially similar to the preceding embodiments, except that the cover is replaced by the flywheel (F') in order to be assembled with the at least one adjuster (20). The at least one adjuster (20) have at least one body (21) and an axially extended hole (22) provided on the body (21) wherein the hole (22) is positioned respectively over to one of the fixing and/or centering holes (14, 15). Each adjuster has a dimension (La').

Referring to Figs.7A-7F, a flywheel assembly (1') is formed instead of a cover assembly. All components (cover, friction clutch, etc...) are the same as those shown in the previous modes, except for the flywheel (F') shape. Of course, all features according to embodiments of figures 1-6 can be apply mutatis mutandis for embodiments of Figs.7A-7F, including the measures of the mentioned method of assembling.

Referring to Figs.7A-7F; the flywheel (F') is now thinned and lightened, in circular shape, with an aperture formed part of a hub F0', preferably segmented or monoblock.

Fig.7.A shows in dotted lines the common flywheel (F') of Figs. 1-6, compared to the new flywheel (F'), in order to visualize this reduction mass of the flywheel assembly (1'). This new flywheel is mad by the following steps are :
i. Casting the steel material, in order to form the interior of the flywheel (F') delineated by a circumference section (13');
ii. Machining the flywheel in order to form transmission surface (Ts) and to refine the circumference section (13') preferably the inner contour of the circumference section,
iii. Drilling in the top of the circumference section (13'), in order to screw fixing and/or centering holes (14, 15) to received adjuster(s).

A circumference section (13') is formed on outer diameter of the flywheel (F'), preferably by press fit, which is in support for receiving the cover (10'). In the center of the flywheel (F') an inner volume is formed, preferably by machine, which is in contact of friction clutch mentioned before, i.e. the transmission surface (Ts) of the flywheel. Between the circumference section (13') and the cover (10'), the adjusters (20) are positioned in such a way that the hole (22) of the adjuster (22) and fixing and/or centering hole (14) of the flywheel (F') are aligned. The flywheel connection mean (FC) is positioned on said holes to connect the cover (10') and a connection surface (Cs) of the flywheel (F') to each other. The body (21) of the adjuster (20) is preassembled to the flywheel (F'). The flywheel (F') and adjuster (20) delivered as one-piece to the friction clutch production process. A pre-assembling can be carried out by both gluing and welding process.

Referring to Fig.7.A to 7.D; The circumference section (13') form a circumferential wall, wih a inner contour refined by machining, between the cover aperture (11) and the transmission surface (Ts). Said circumferential wall provides distance in axial direction between the cover aperture (11) and the transmission surface (Ts).

Referring to Fig.7.E to 7.F; the flywheel is alternatively exempt from circumferential wall or inner contour of circumference section or even additional maching step to finish its form. Just the axial height (La) of the adjuster provides distance in axial direction between the cover aperture (11) and the transmission surface (Ts). The circumference section (13') is here plane and mixed up with the transmission surface (Ts). Said plane surface provides equal axial direction between the circumference section (13') and the transmission surface (Ts). Thus the reduction mass is even greater than in Fig.7A.

Referring to Fig.7.A to 7.E; fixing and/or centering holes (14, 15) are provided into the circumference section (13') of the flywheel (F'), here nine centering holes (15) called blind holes, which are enable a connection between the flywheel (F') and the cover (10'). Such blind holes of the circumference section (13') form receptacles or plot to retain correctly adjusters. Each adjuster (20) and blind hole (15) have complementary shapes, in order to form the flywheel assembly (1'). The depth of blind hole (15) can be achieve by only changing the axial height (La) of adjuster.

The adjuster is preferably machining in a steel washer, for example C35/40 Material. Referring to Fig.7.B, the adjuster has a cylindrical shaped bodie (21) partly housed in the blind holes (15). Referring to Fig.7.C, the adjuster (20) has an oblong shaped bodie (21), with rounded ends and side faces, partly housed in the blind holes (15).

The blind holes can be shaped to complement the adjusters, to improve assembly by the operator. The blind holes can be on either side of the inner and outer diameter of the circumference section (13') of the flywheel (F').

The adjusters (20) are angularly distributed into several groups of adjusters, preferably at least two groups spaced apart and spaced in an optimized manner. An group comprises at least two adjusters having common features (height, implantation diameter...). Referring to Fig.7.A to 7.E, three groups of adjusters (20) are angularly distributed around the axis (11), preferably according to a regular or uniform distribution.

The protection scope of the invention has been mentioned in the claims that are attached and the invention cannot be limited to the embodiments described in this detailed description. It is clear that invention can provide similar embodiments within the scope of the above mentioned descriptions without deviating from the main theme of the invention.

In the description, some elements can be indexed, such as: the first and second adjusters, the first and second (lateral) faces; the first, second and third dimensions. This is simple indexing to differentiate and name similar but not identical elements. This indexing does not imply a priority of one element over another, and such names can easily be interchanged without departing from the scope of the present description.

## Claims

1. A cover or flywheel assembly (1, 1') for friction clutch, comprising :
- a cover (10) for at least partially covering the friction clutch, or
- a flywheel (F') for at least partially supporting the friction clutch,
- an circumference section (13, 13') on the said cover (10) or flywheel (F'),
and at least two fixing and/or centering holes (14, 15) provided on the circumference section (13, 13') which enable a connection respectively
between the said cover (10) and a flywheel (F) or
between the said flywheel (F') and a cover (10'),
by riveting or screwing for transferring a torque between the flywheel (F, F') and the friction clutch, wherein at least one adjuster (20) axially extended and fixedly welded or glued to the bottom part of the circumference section (13, 13') for adjusting an axial distance respectively
between the circumference section (13) of the cover (10) and the flywheel (F) or
between the circumference section (13') of flywheel (F') and the cover (10'),
the at least one adjuster (20) having at least one body (21) and an axially extended hole (22) provided on the body (21) wherein the hole (22) is positioned respectively
under to one of the fixing and/or centering holes (14, 15), or
over to one of the fixing and/or centering holes (14, 15).

2. A cover or flywheel assembly (1, 1') according to Claim 1, wherein the at least one body (21) is form of complementary shape for the circumference section (13, 13'), preferably the body (21) is in shape of prism or cylinder or oblong.

3. A cover or flywheel assembly (1, 1') according to Claim 1 or 2, wherein the at least one body (21) is connected fixedly welded or glued to the bottom part of the circumference section (13, 13'), preferably on at least one axially extend welding projection (211) formed on the body (21) surface which contacts the circumference section (13, 13').

4. A cover or flywheel assembly (1, 1') according to any one of the preceding claims, wherein :
- a single adjuster (20) positioned in all fixing and/or centering holes (14, 15), or
- at least two adjusters (20) angularly distributed around the axis (R) of revolution, which one of them is positioned under the fixing hole (14) and other one is positioned under the fixing or the centering hole (14, 15), preferably an axial dimension of the adjusters (20) are different from each other.

5. A cover assembly or flywheel (1, 1') according to any one of the preceding claims, wherein the adjuster (20) having :
- at least two body (21) which one of them is positioned under one fixing hole (14) and other on is positioned under another fixing or centering hole (14, 15) and
- a connection arm (23) for connection the bodies (21) to each other, positioned such that contact circumference section (13, 13') of the cover or of the flywheel,
the connection arm (23) is connected to fixedly welded or glued to the bottom part of the circumference section (13, 13'),
preferably the connection arm (23) is in form of arc or in form of ring.

6. A cover or flywheel assembly (1, 1') according to any one of the preceding
claims, wherein the at least one adjuster (20) having plurality of bodies (21), the bodies (21) are formed in a same material and/or have a same design,
preferably the bodies (21) are form of complementary shapes with
- the cover (10) to secure them together with cover and prevent them from rotating, or
- the flywheel (F') to secure them together with flywheel and prevent them from rotating, and/or preferably the bodies (21) are axially offset from one another, and/or preferably the bodies (21) cooperate axially on each other, for example a body of first adjuster (20) of a first is positioned on bottom of another body of a second adjuster (20) in axial direction and the said adjusters (20) are connected to each other by gluing or welding, especially on their body.

7. A cover or flywheel assembly (1, 1') according to any one of the preceding claims wherein the at least one adjuster (20) having a planar surface provided on top of the body (21) which extends in negative or positive radial direction and contacts to under the circumference section (13, 13').

8. A cover or flywheel assembly (1, 1') according to any one of the preceding claims, wherein the at least one adjuster (20) having a ridge (212) formed on connection arm (23) to make level of planar surface is lower than the connection arm (23), preferably the ridge (212) is formed on sections that connects the connection arm (23) and the hole (22) positioned under the centering hole (15).

9. A cover or flywheel assembly (1, 1') according to any one of the preceding claims, wherein the at least one adjuster (20) having a facing surface (214), which facing toward to the pressure plate (30), is concave curved.

10. A cover or flywheel assembly (1, 1') according to any one of the preceding claims, wherein the at least one adjuster (20) is made of a metal sheet or a metal strip or metal washer.

11. A cover or flywheel assembly (1, 1') according to any one of the preceding claims, comprising a series of adjusters (20), angularly distributed around the axis of revolution, preferably into several groups (Gx) of adjusters.

12. A friction clutch for transmitting torque between the flywheel (F, F') and the vehicle transmission system comprising,
a cover assembly (1) according to the any of claim 1-11 connected to a flywheel (F) or a flywheel assembly (1') according to the any of claim 1-11 connected to a cover (10'), a friction clutch subassembly to be positioned or stacked inside the cover (10, 10'), which comprising at least:
a pressure plate (30) and diaphragm spring (40) coaxially arranged between the cover and the flywheel and diaphragm spring (40) is adapted to be in contact with the clutch cover (10, 10'), and
a friction plate (60) under the pressure plate (30) adapted to be selectively contact the flywheel (F, F') according to pressing movement of the pressure plate (30), and having a first face (60A) adapted to be in contact with the pressure plate (30), and a second face (60B) opposite.

13. A method of assembling an adjuster (20) and a cover (10) comprising the following steps:
a) providing a cover (10) having circumference sections (13) and at least two fixing and/or centering holes (14, 15) provided on the circumference section (13)
b) selecting
- a flywheel (F) to be connected to the cover (10) having
a transmission surface (Ts) to be selectively contacted a friction plate (60) and
a connection surface (Cs) which the cover (10) and the flywheel (F) connects each other,
- a friction clutch subassembly to be positioned or stacked inside the cover (10), which comprising at least,
a pressure plate (30) and diaphragm spring (40) coaxially arranged between the cover (10) and the flywheel and diaphragm spring (40) is adapted to be in contact with the clutch cover (10), and
a friction plate (60) under the pressure plate (30) adapted to be selectively contact a transmission surface (Ts) according to pressing movement of the pressure plate (30), and having a first face (60A) adapted to be in contact with the pressure plate (30), and a second face (60B) opposite;
c) measuring
- a first dimension (L1) representative of an axial distance between the top of the clutch cover (10) and the first face (60A)
- a second dimension (L2) representative of an axial distance between the top of the clutch cover (10) and the circumference sections (13) of the clutch cover (10)
- a third dimension (L3) representative of an axial distance between the transmission and connection surface (Ts, Cs) of the flywheel (F);
d) selecting and providing at least one adjuster (20) having at least a body (21) and an axially extended hole (22) provided on the body (21), said extended body (21) is configured to be mounted on the bottom part of circumference section (13) and
an adjuster dimension (La) axially between a first lateral face (20A) configured to be fixed to the clutch cover (10) and a second lateral face (20B) configured to be fixed to connection surface (Cs) of the flywheel (F) and
the total value of adjuster dimensions (La) being selected as a function of the first and second and third dimensions (L1, L2, L3) so as to adjust the positions of the clutch cover and the friction clutch subassembly relative to each other;
e) then positioning the first lateral face (20A) on the bottom part of circumference section (13), then connecting fixedly said adjuster (20) to the clutch cover (10) by welding or gluing.

14. A method of assembling an adjuster (20) and a flywheel (F') comprising the following steps:
a') providing a flywheel (F') having circumference sections (13') and at least two fixing and/or centering holes (14, 15) provided on the circumference section (13')
b') selecting
- a cover (10') to be connected to the flywheel (F'),
a transmission surface (Ts) to be selectively contacted a friction plate (60) and
a connection surface (Cs) which the flywheel (F') and the cover (10') connects each other,
- a friction clutch subassembly to be positioned or stacked inside the cover (10'), which comprising at least,
a pressure plate (30) and diaphragm spring (40) coaxially arranged between the cover (10') and the flywheel and diaphragm spring (40) is adapted to be in contact with the clutch cover (10'), and
a friction plate (60) under the pressure plate (30) adapted to be selectively contact a transmission surface (Ts) according to pressing movement of the pressure plate (30), and having a first face (60A) adapted to be in contact with the pressure plate (30), and a second face (60B) opposite;
c') measuring
- a first dimension (L1) representative of an axial distance between the top of the clutch cover (10') and the first face (60A)
- a second dimension (L2) representative of an axial distance between the top of the clutch cover (10') and the circumference sections (13') of the flywheel (F')
- a third dimension (L3) representative of an axial distance between the transmission and connection surface (Ts, Cs) of the flywheel (F');
d') selecting and providing at least one adjuster (20) having at least a body (21) and an axially extended hole (22) provided on the body (21), said extended body (21) is configured to be mounted on the bottom part of circumference section (13') and
an adjuster dimension (La) axially between a first lateral face (20A) configured to be fixed to the clutch cover (10') and a second lateral face (20B) configured to be fixed to connection surface (Cs) of the flywheel (F') and
the total value of adjuster dimensions (La) being selected as a function of the first and second and third dimensions (L1, L2, L3) so as to adjust the positions of the clutch cover and the friction clutch subassembly relative to each other;
e') then positioning the second lateral face (20B) on the bottom part of circumference section (13'), then connecting fixedly said adjuster (20) to the clutch cover (10') by welding or gluing.

15. A method of assembling according to Claim 13 or 14, wherein
at least two adjusters (20) are selected and provided and one of the adjusters (20) is positioned on bottom of the other adjuster (20) in axial direction and the adjusters (20) are connected to each other by gluing or welding, and/or
the adjuster dimensions (La) are different from each other.
